# EUROPEAN PATENT SPECIFICATION

(11) **EP 3 979 688 B1**
(45) Date of publication and mention of the grant of the patent: **08.01.2025**
(21) Application number: 20837315.9
(22) Date of filing: 07.07.2020
(51) Int. Cl.: H04W 36/14, H04W 36/00

(54) **METHOD AND APPARATUS FOR DETERMINING INTER-FREQUENCY ADJACENT AREA**
VERFAHREN UND VORRICHTUNG ZUR BESTIMMUNG DER ANGRENZENDEN ZWISCHENFREQUENZFLÄCHE
PROCÉDÉ ET APPAREIL PERMETTANT DE DÉTERMINER UNE ZONE ADJACENTE INTER-FRÉQUENCE

(30) Priority: 09.07.2019 CN 201910613787
(43) Date of publication of application: 06.04.2022
(73) Proprietor: ZTE Corporation, Shenzhen, Guangdong 518057 (CN)
(72) Inventor: SHI, Chenghui, Shenzhen, Guangdong 518057 (CN)
(74) Representative: WBH Wachenhausen Patentanwälte PartG mbB
(86) International application number: PCT/CN2020/100541
(87) International publication number: WO 2021/004440

(56) References cited:
- EP-A1- 1 686 827
- EP-A2- 2 826 294
- WO-A1-2014/089069
- CN-A- 109 819 433
- US-A1- 2018 139 666
- ANONYMOUS: "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.6.0, 29 June 2019 (2019-06-29), pages 1 - 519, XP051754472
- ERICSSON: "PLMN per carrier for UTRAN and E-UTRAN Neighbor cell lists", 3GPP DRAFT; R2-083384 PLMN FOR NCELLS, vol. RAN WG2, 24 June 2008 (2008-06-24), Warsaw, Poland, pages 1 - 9, XP050603886, DOI: 20200911104429X

## Description

### TECHNICAL FIELD

The present disclosure relates to, without limitation, network sharing technologies, such as a method and a device for determining inter-frequency neighbor cells.

### BACKGROUND

Network sharing, a practice of sharing the high cost of mobile network deployment between different operators during the network deployment phase, can greatly improve network utilization. During deployment of network sharing, a border region between the shared and non-shared networks may occur due to the scope of a shared region, shared network transformation or deployment cadence. In this case, during the handover of User Equipment (UE) at frequencies other than those of a network of an operator to which it belongs from a shared network to a non-shared network, the UE is required to perform handover to the network with frequencies of the operator to which it belongs, i.e., intra-frequency handover is disabled, but inter-frequency or inter-RAT handover is required (because inter-RAT handover is also a kind of inter-frequency handover (IFHO), IFHO or inter-RAT handover is hereafter referred to as IFHO, which means IFHO or inter-RAT handover unless otherwise specified).

From two operators sharing a network at the beginning to four, five or more operators sharing a network, network convergence is a trend with increasing size and complexity of shared networks. In the border region (a border region between the shared network and the non-shared network) of the shared network, the UE of different home networks (i.e., UE of different operators) in a Public Land Mobile Networks (PLMN) may perform handover at different frequencies. As all operators have the demand for handover to their own home networks in the border region, there will a large number of frequencies in total for handover, which may go beyond the support capacity of the UE.

For example, under the constraints of relevant protocols of the 3rd Generation Partnership Project (3GPP), the UE generally supports the measurement on at most two different frequencies in a system in a Frequency Division Duplexing (FDD) Universal Terrestrial Radio Access (UTRA) network, at most three different frequencies in a Time Division Duplex (TDD) UTRA network, and at most three different frequencies in a Frequency Division Duplex Evolved Universal Terrestrial Radio Access (FDD E-UTRA) system in an Evolved Universal Terrestrial Radio Access (E-UTRA) network (the same as that in a Time Division Duplex Evolved Universal Terrestrial Radio Access (TDD E-UTRA) network). More frequencies are related to the terminal capability, and any UE supporting the expansion of measurement capability may measure eight frequencies in the system. However, due to the limited capability of the UE, many UEs make measurements according to the minimum requirements of 3GPP. With the increasing complexity of the shared network, the number of frequencies will also be limited. In a 5^{th} Generation Wireless Systems (5G) network, the least frequencies supported by different network architectures (such as Non Stand-Alone (NSA) and Stand-Alone (SA) may vary. For example, in the NSA network, the system generally supports the measurement on seven different New Radio (NR) frequencies. For another example, in the SA network, the system generally supports the measurement on seven NR different frequencies. Similarly, 5^{th} Generation Wireless Systems New Radio (5G NR) UE is also limited in frequency measurement capability, and some UEs are implemented according to the minimum requirements of the protocols, which often leads to insufficient frequencies in complex networking.

In the border region of the shared network (namely a border between the shared network region and the non-shared network region, also known as a border region of a shared carrier), there will be a lot of configured inter-frequency neighbor cells and inter-RAT neighbor cells (hereafter referred to as inter-frequency neighbor cells, which all refer to inter-frequency neighbor cells or inter-RAT neighbor cells unless otherwise specified), among which many neighbor cells of the PLMN home network will be configured, thus the UE may measure many invalid neighbor cells (such as those which are not neighbor cells of the home network of the UE). Due to the limited number (up to 32) of neighbor cells contained in a measurement control message sent to the individual UE by each cell in an UTRA network, few or even no valid neighbor cells of the home network may be received by the individual UE, and the handover of the UE to the home network fails, resulting in drop calls. In E-UTRA and 5G NR, the frequencies for measurement will be assigned to the UE. The measurement capability of the UE may not be able to support all different frequencies which are sent to the UE. Even the UE can support all of the different frequencies, the different frequencies may cause the UE to perform many invalid measurements (e.g., the measurement report is prepared for the home network of other UE, and an Evolved NodeB (eNodeB), upon receipt of the measurement report, determines that the neighbor cell is not authorized for handover) regardless of whether the measurement capability of the UE is exceeded or not. The invalid measurements will waste UE's measurement gaps and consume UE's performance.

US 2018/139666 A1 relates to discovery of a neighbor radio access system by a user mobile communications device serviced in a radio access network (RAN) for reporting to a serving system in the RAN. User mobile communications device serviced by a RAN is configured to scan one or more frequency ranges (e.g., bands) to discover other neighbor radio access systems. This is opposed to, for example, the user mobile communications device only searching for transmitted communications signals at specific center frequency (e.g., an EARFCN). There may be other radio access systems that operate neighbor cells and in other frequency bands in proximity the RAN serving the user mobile communications device. Discovered neighboring radio access systems can be reported by the user mobile communications device to its serving RAN in a measurement report, which can then be used by the serving RAN for other functionalities, such as trigger handovers of user mobile communications device for example.

EP 2826294 A2 relates to a communication system in which an LTE base station and network are shared by two or more CDMA operators. Mobility parameters for the different CDMA operators are available and selection between the parameters is performed by the LTE base station, a mobile telephone connected to the LTE base station or a network node, such as an O&M node. The selection is performed based on information relating to subscription information for the mobile telephone.

ANONYMOUS: "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. V15.6.0, 29 June 2019 (2019-06-29), pages 1-519, relates to the Radio Resource Control protocol for the radio interface between UE and NG-RAN.

### SUMMARY

According to the present disclosure, a method and a device for determining inter-frequency neighbor cells are provided, which can improve the success rate of inter-frequency handover (IFHO) and reduce the call drop rate.

According to the present disclosure, a method for determining inter-frequency neighbor cells is provided, which is performed by a Radio Network Controller and/or a base station, includes: acquiring a Public Land Mobile Network Identity Document (PLMN ID) of a home network of User Equipment (UE) accessing a border region of a shared network, the border region being a region where the coverage areas of base stations shared by multiple mobile network operators overlap with the coverage areas of base stations operated by a single mobile network operator, the shared network being a radio access network shared by the multiple mobile network operators; and processing, based on configuration information of different frequencies for inter-frequency handover (IFHO) corresponding to the PLMN ID, information of neighbor cells to which the UE is able to perform handover, to obtain information of the inter-frequency neighbor cells containing information of neighbor cells with the different frequencies; prior to acquiring a PLMN ID of a home network of UE accessing a border region of a shared network, further comprising: allowing the UE to access the border region of the shared network, which comprises: allowing the UE located in the border region of the shared network to access or perform handover to a target border cell in the border region of the shared network, wherein the target border cell is a primary serving cell; processing information of neighbor cells to which the UE is able to perform handover comprises: identifying, based on the PLMN ID of the PLMN which is the home network of the UE, different frequencies corresponding to the target border cell to which the UE accesses or performs handover in the configuration information of the different frequencies for IFHO of the PLMN; and filtering, based on the different frequencies identified, all the different frequencies and inter-frequency neighbor cells contained in the information of the neighbor cells to which the UE is able to perform handover, and retaining neighbor cells with the different frequencies identified and deleting neighbor cells without the different frequencies identified.

According to the present disclosure, a computer-readable storage medium storing a computer-executable instruction is provided, where the computer-executable instruction, when executed by a processor, causes the processor to carry out any of the above methods for determining inter-frequency neighbor cells.

According to the present disclosure, a device for determining inter-frequency neighbor cells is further provided, including: an acquisition module and a processing module, wherein the acquisition module is configured to acquire a Public Land Mobile Network Identity Document (PLMN ID) of a home network of User Equipment (UE) in response to monitoring that the UE accesses a border region of a shared network, the border region being a region where the coverage areas of base stations shared by multiple mobile network operators overlap with the coverage areas of base stations operated by a single mobile network operator, the shared network being a radio access network shared by the multiple mobile network operators; and the processing module is configured to process, based on configuration information of different frequencies for inter-frequency handover (IFHO) corresponding to the PLMN ID, information of neighbor cells to which the UE is able to perform handover, to obtain information of the inter-frequency neighbor cells containing information of neighbor cells with the different frequencies; the UE accesses a border region of a shared network comprises: allowing the UE located in the border region of the shared network to access or perform handover to a target border cell in the border region of the shared network, where the target border cell is a primary serving cell; the processing module is further configured to: identify, based on the PLMN ID of the PLMN which is the home network of the UE, different frequencies corresponding to the target border cell to which the UE accesses or performs handover in the configuration information of the different frequencies for IFHO of the home PLMN; and filter, based on the different frequencies identified, all the different frequencies and inter-frequency neighbor cells contained in the information of the neighbor cells to which the UE is able to perform handover, and retain neighbor cells with the different frequencies identified and delete neighbor cells without the different frequencies identified.

### BRIEF DESCRIPTION OF DRAWINGS

The accompanying drawings are provided to facilitate understanding of the technical scheme of the present disclosure, and constitute a part of the description. The accompanying drawings and the embodiments of the present disclosure are intended to illustrate, rather than limit the technical scheme of the present disclosure.
FIG. 1 is a schematic diagram of inter-frequency handover (IFHO) in a border region of a shared carrier according to embodiment one of the present disclosure;
FIG. 2 is a flow chart of a method for determining inter-frequency neighbor cells according to an embodiment of the present disclosure;
FIG. 3 is a schematic structural diagram of a device for determining inter-frequency neighbor cells according to an embodiment of the present disclosure;
FIG. 4 is a schematic diagram of relations of inter-frequency neighbor cells for handover configured with more than two frequencies in a cell according to embodiment one of the present disclosure;
FIG. 5(a) is a schematic diagram of relations of neighbor cells in a second list for User Equipment (UE) of a network A according to the embodiment one of the present disclosure;
FIG. 5(b) is a schematic diagram of relations of neighbor cells in a second list for UE of a network B according to embodiment one of the present disclosure;
FIG. 5(c) is a schematic diagram of relations of neighbor cells in a second list for UE of a network C according to embodiment one of the present disclosure;
FIG. 6 is a schematic diagram of inter-frequency handover (IFHO) of a border region of a shared carrier according to embodiment two of the present disclosure;
FIG. 7 is a schematic diagram of relations of inter-frequency neighbor cells for handover configured with more than three frequencies in a cell according the second embodiment two of the present disclosure;
FIG. 8(a) is a schematic diagram of relations of neighbor cells in a second list for User Equipment (UE) of a network A according to embodiment two of the present disclosure;
FIG. 8(b) is a schematic diagram of relations of neighbor cells in a second list for UE of a network B according to the embodiment two of the present disclosure;
FIG. 8(c) is a schematic diagram of relations of neighbor cells in a second list for UE of a network C according to the embodiment two of the present disclosure;
FIG. 9 is a schematic diagram of inter-frequency handover (IFHO) in a border region of a shared carrier according to embodiment three of the present disclosure;
FIG. 10 is a schematic diagram of relations of inter-frequency neighbor cells for handover configured with 11 frequencies in a cell according to embodiment three of the present disclosure;
FIG. 11(a) is a schematic diagram of relations of neighbor cells in a second list for User Equipment (UE) of a network A according to embodiment three of the present disclosure;
FIG. 11(b) is a schematic diagram of relations of neighbor cells in a second list for UE of a network B according to embodiment three of the present disclosure;
FIG. 11(c) is a schematic diagram of relations of neighbor cells in a second list for UE of a network C according to the embodiment three of the present disclosure;
FIG. 11(d) is a schematic diagram of relations of neighbor cells in a second list for UE of a network D according to the embodiment three of the present disclosure; and
FIG. 11(e) is a schematic diagram of relations of neighbor cells in a second list for UE of a network E according to the embodiment three of the present disclosure.

### DETAILED DESCRIPTION

In a typical configuration of the present disclosure, a computing device includes one or more Central Processing Units (CPU), input/output interfaces, network interfaces, and a memory.

The memory may include volatile memory, Random Access Memory (RAM) and/or nonvolatile memory in a computer-readable medium, such as Read-Only Memory (ROM) or flash RAM. The memory is an example of a computer-readable medium.

The computer-readable medium includes permanent, non-permanent, removable and non-removable media that can store information by any method or technology. The information may be computer-readable instructions, data structures, modules of programs, or other data. Examples of the computer storage medium include, without limitation, Phase-Change Random Access Memory (PRAM), Static Random-Access Memory (SRAM), Dynamic Random Access Memory (DRAM), other types of random access memory, read only memory, Electrically Erasable Programmable Read Only Memory (EEPROM), flash memory or other memory technologies, Compact Disc Read-Only Memory (CD-ROM), Digital Versatile Disc (DVD) or other optical storage, and cassette tape. Magnetic tape storage, magnetic disk storage or other magnetic memory devices or any other non-transmission media may be configured to store information accessible by computing devices. According to the definition in the present disclosure, the computer-readable medium does not include transitory media, such as modulated data signals and carrier waves.

In order to make the objective, technical schemes and advantages of the present disclosure clear, embodiments of the present disclosure will be described below with reference to the accompanying drawings.

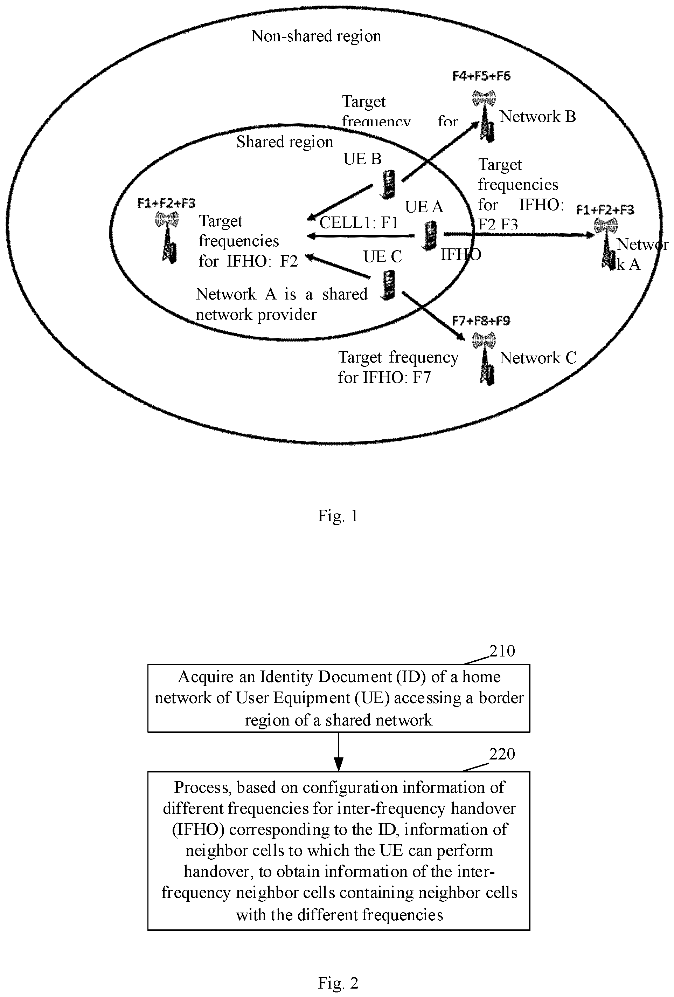

FIG. 1 is a schematic diagram of inter-frequency handover (IFHO) of a border region of a shared carrier according to embodiment one of the present disclosure. As shown in FIG. 1, an operator A is a network A, an operator B is a network B, an operator C is a network C, and the operators A, B and C deploy a shared FDD UTRA network in a region X, namely a shared region therein, and create networks separately in other regions. It is assumed that the operator A is provided with frequencies F1, F2 and F3, the operator B is provided with frequencies F4, F5 and F6, and the operator C is provided with frequencies F7, F8 and F9. In a shared region, the operators A, B and C may use the frequencies F1, F2 and F3 of the operator A. In a non-shared region, the operators A, B and C independently create/deploy their respective networks. The operator A can only use the frequencies F1, F2 and F3, the operator B can only use the frequencies F4, F5 and F6, and the operator C can only use the frequencies F7, F8 and F9. Neighbor cells originally planned for IFHO in a CELL1 (with a carrier frequency F1) of the operator A in a shared border region are a CELL2 (with a carrier frequency F2) and a CELL3 (with a carrier frequency F3), which are exactly two different frequencies (there may also be more neighbor cells (up to 32) with a carrier frequencies F2 and F3). After the network is shared, User Equipment (UE) of the operators B and C may also access the CELL1. The CELL1 is located in the border region, and the UE of the operator B and the UE of the operator C have the demand for handover to their respective home networks, so the CELL1 is at least additionally provided with non-shared networks CELL4 (with a carrier frequency F4) and CELL5 (with a carrier frequency F7) as inter-frequency neighbor cells, and information of the inter-frequency neighbor cells of the CELL1 includes neighbor cells with four frequencies (neighbor cells with the frequencies F2, F3, F4 and F7). However, according to the relevant regulations of the 3GPP protocols, User Equipment (UE) of the FDD UTRA network may only measure two different frequencies, so a controller will select only two inter-frequency neighbor cells to send in a measurement control message. For example, it is assumed that the frequencies F2 and F4 are selected by the controller, the following problems will occur.
1. The different frequencies for the UE of the operator A include the frequency F2 only, with the frequency F3 missed. Although the measurement can be made on the frequency F4 to which the handover is disabled, the measurement is an invalid measurement. Therefore, the UE of the operator A cannot perform handover to the carrier frequency F3, resulting in a failure to achieve the maximum number (two) of frequencies for handover.
2. Since the neighbor cell with the frequency F7 is not carried in the measurement control message, the UE of the operator C cannot perform handover to its home network.

In this case, the number of different frequencies and neighbor cells of the operators A, B and C will be reduced (in extreme cases, the UE of the operator C cannot perform handover to its home network), which greatly reduces the success rate of IFHO and increases the call drop rate.

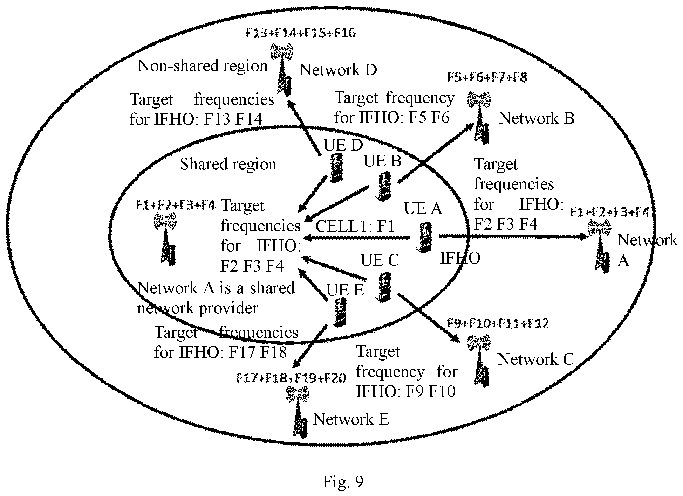

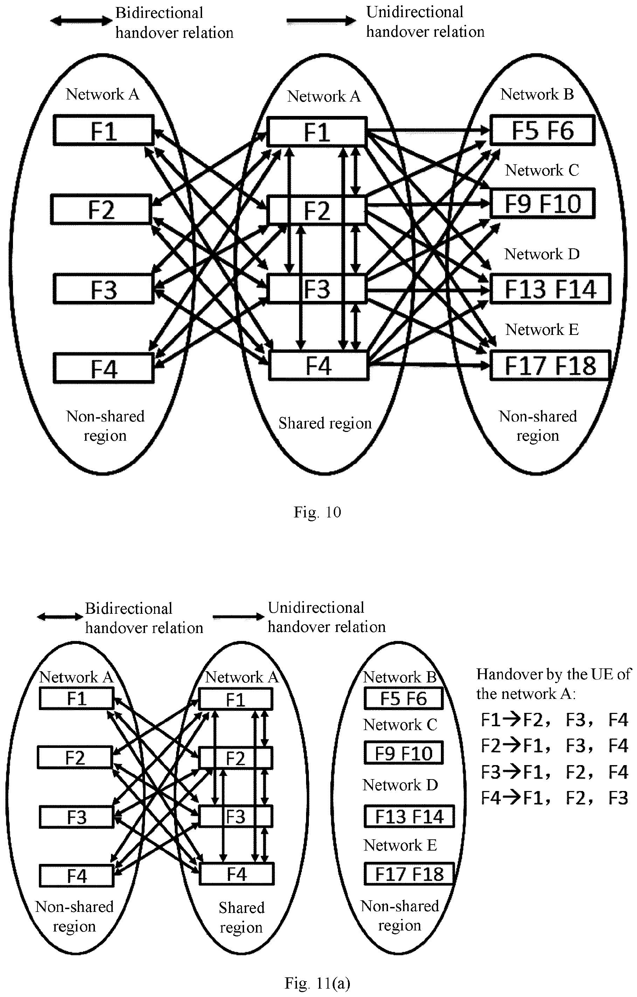

FIG. 9 is a schematic diagram of IFHO in a border region of a shared carrier according to embodiment three of the present disclosure. As shown in FIG. 10, an operator A is a network A, an operator B is a network B, an operator C is a network C, an operator D is a network D, an operator E is a network E, and the operators A, B, C, D and E deploy a shared FDD E-UTRA network or a 5G NR network in a region X, namely a shared region, and create networks separately in other regions. It is assumed that the operator A is provided with frequencies F1, F2, F3 and F4, the operator B is provided with frequencies F5, F6, F7 and F8, the operator C is provided with frequencies F9, F10, F11 and F12, the operator D is provided with frequencies F13, F14, F15 and F16, and the operator E is provided with frequencies F17, F18, F19 and F20. In the shared region, the operators A, B, C, D and E may use the frequencies F1, F2, F3 and F4 of the operator A. In a non-shared region, the operators A, B, C, D and E independently create/deploy their respective networks. The operator A can only use the frequencies F1, F2, F3 and F4, the operator B can only use the frequencies F5, F6, F7 and F8, the operator C can only use the frequencies F9, F10, F11 and F12, the operator D can only use the frequencies F13, F14, F15 and F16, and the operator E can only use the frequencies F17, F18, F19 and F20. The frequencies originally planned for IFHO in a CELL1 (with a carrier frequency F1) of the operator A in a shared border region are the frequencies F2, F3 and F4, without frequency waste or invalid measurement. After the network is shared, the UE of the operators B, C, D and E may also access the CELL1. The CELL1 is located in the border region, and the UE of the operators B, C, D and E may have the demand for handover to their respective home networks, so the CELL1 is additionally provided with neighbor cells with frequencies F5, F6, F9, F10, F13, F14, F17 and F18 of a non-shared network as inter-frequency neighbor cells, and information of the inter-frequency neighbor cells of the CELL1 includes inter-frequency neighbor cells with 11 frequencies (frequencies F2, F3, F4, F5, F6, F9, F10, F13, F14, 17 and F18). According to the relevant regulations of the 3GPP protocols, User Equipment (UE) of the FDD E-UTRA network may generally measure three different intra-system frequencies (any UE supporting the expansion of measurement capability may measure eight frequencies), and UE of the 5G NR network may generally measure seven different intra-system frequencies. Although these are the minimum requirements, most of the UE make measurements according to the minimum requirements of the Protocol in practice, and there are few different frequencies for measurement. Moreover, even though the UE has a strong measurement capability, and the number of measurement frequencies is not limited, 11 frequencies to be measured by the UE of each home network includes many invalid frequencies, which wastes the measurement gap of the UE and increases the radio load. Moreover, too many measurement frequencies carried in the network, once beyond the measurement capability of the UE, will also cause problems to the UE.

In order to solve the above problems to at least a certain extent, a method for determining inter-frequency neighbor cells is provided according to the present disclosure, as shown in FIG. 2, including steps 210 and 220.

In a step of S210, an Identity Document (ID) of a home network of User Equipment (UE) accessing a border region of a shared network is acquired.

Prior to this step, the method further includes a step of allowing the UE to access the border region of the shared network, which includes a step of allowing the UE located in the border region of the shared network (may also be called a border region of a shared carrier) to access or perform handover to a border cell (may also be called a target border cell) in the border region of the shared network, where the border cell is a primary serving cell.

In an example, in a UTRA network, the primary serving cell is a Primary Cell in an active set. In E-UTRA and 5G NR networks, the primary serving cell is a Primary Cell (PCell).

In an example, the ID of the home network of the UE includes a Public Land Mobile Network Identity Document (PLMN ID), which may also be called Selected Public Land Mobile Network Identity Document (Selected-PLMN ID) herein, of the PLMN which is a home network of the UE.

In an example, the Selected-PLMN ID is the PLMN ID of the home network or an equivalent network of the UE.

Each PLMN is determined by the PLMN ID, and the PLMN ID includes a Mobile Country Code (MCC) and a Mobile Network Code (MNC).

In a step of S220, information of neighbor cells to which the UE is able to perform handover is processed based on configuration information of different frequencies for inter-frequency handover (IFHO) corresponding to the ID, to obtain information of the inter-frequency neighbor cells containing information of neighbor cells with the different frequencies.

In an example, prior to the step 220, the method further includes a step of: allocating zero to a specified number of different frequencies to the PLMN of each operator in each primary serving cell in the border region of the shared network to form configuration information of all different frequencies for IFHO.

In an example, in the UTRA network, the specified number is a first specified number, such as two different frequencies; for E-UTRA or 5G NR, the specified number is a second specified number, such as 16 different frequencies.

These different frequencies are the target frequencies to which the UE belonging to the PLMN may perform IFHO in the primary serving cell. For example, except for these target frequencies, there are no other frequencies at which the UE under each PLMN ID can perform handover.

In an example, prior to the step 220, the method further includes a step of: configuring, based on the inter-frequency neighbor cells to which the UE of each operator may actually perform IFHO, information of the inter-frequency neighbor cells of each cell in the border region of the shared network as the information of the neighbor cells to which the UE is able to perform handover based on the inter-frequency neighbor cells to which the UE of each operator may actually perform IFHO.

The information of the inter-frequency neighbor cells of each cell in the border region of the shared network is determined based on the information of the neighbor cells configured according to the actual situation and planning for IFHO. In this case, there is no need to consider the quantitative restriction of frequencies. For example, in the UTRA network, it is possible to configure more than the third specified number (such as neighbor cells with 32 different frequencies) and more than the first specified number (such as the information of neighbor cells with two different frequencies), and each cell may be configured with as many inter-frequency neighbor cells as possible through planning. For another example, in the E-UTRA or 5G NR network, there is no quantitative restriction on frequencies and neighbor cells in principle. In an embodiment, regardless of the UTRA network, the E-UTRA network or the 5G NR network, there will be some quantitative restrictions due to capacity when configuring inter-frequency neighbor cells.

In an example, in the UTRA network, the information of the neighbor cells to which the UE is able to perform handover refers to information of the neighbor cells after all cells in the active set are merged. Since the neighbor cells of all cells in the active set are the neighbor cells to which the UE is able to perform handover, the neighbor cells of the cells in the active set will be merged first to delete the repetitive inter-frequency neighbor cells. The number of the neighbor cells merged may exceed the third specified number, such as 32, and the number of different frequencies may exceed the first specified number, such as 2.

Step S220 further includes the following steps of: identifying a different frequency corresponding to the border cell to which the UE accesses or performs handover in the configuration information of the different frequencies for IFHO of the PLMN based on the PLMN ID of the PLMN which is the home network of the UE; and filtering all the different frequencies and inter-frequency neighbor cells contained in the information of the neighbor cells to which the UE is able to perform handover based on the different frequencies identified to retain the neighbor cells with the different frequencies identified, and delete the neighbor cells without the different frequencies identified.

In an example, in the UTRA network, the number of the different frequencies filtered will not exceed the first specified number, such as 2; and in the E-UTRA or 5G NR network, the number of the different frequencies filtered will not exceed the second specified number, such as 16.

In an example, in the UTRA network, if the number of the neighbor cells in filtered inter-frequency neighbor cells exceeds a third specified number (such as 32), the method further includes following steps of: sorting the neighbor cells in the filtered inter-frequency neighbor cells based on priorities of the neighbor cells, and selecting the third specified number of neighbor cells (such as 32 neighbor cells) from the highest priority as the filtered inter-frequency neighbor cells, i.e., selecting a first 32 neighbor cells with high priority as the filtered inter-frequency neighbor cells. In an example, neighbor cells with the same priority may be sorted in a configuration sequence from front to back.

With the method for determining inter-frequency neighbor cells provided in the present disclosure, in the UTRA network, the number of the inter-frequency neighbor cells in the determined information of the inter-frequency neighbor cells will not exceed the first specified number, such as 32, and the number of different frequencies will not exceed the second specified number, such as 2; and in the E-UTRA or 5G NR network, the number of different frequencies in the determined information of the inter-frequency neighbor cells will not exceed the third specified number, such as 16. According to the present disclosure, the different frequencies and the inter-frequency neighbor cells are utilized to the greatest extent, which reduces the measurement gaps of the UE, improves the success rate of IFHO and reduces the call drop rate.

In an example, the method further includes a step of: sending the obtained information of the inter-frequency neighbor cells to the UE through a measurement control message, so as to enable the UE to measure the inter-frequency neighbor cells duly.

According to an embodiment of the present disclosure, a computer-readable storage medium storing a computer-executable instruction is provided, where the computer-executable instruction, when executed by a processor, causes the processor to carry out any of the above methods for determining inter-frequency neighbor cells.

According to an embodiment of present disclosure, a device for determining inter-frequency neighbor cells is provided, including a processor and a memory, where the memory stores a computer program which, when executed by the processor, causes the processor to carry out any of the above methods for determining inter-frequency neighbor cells.

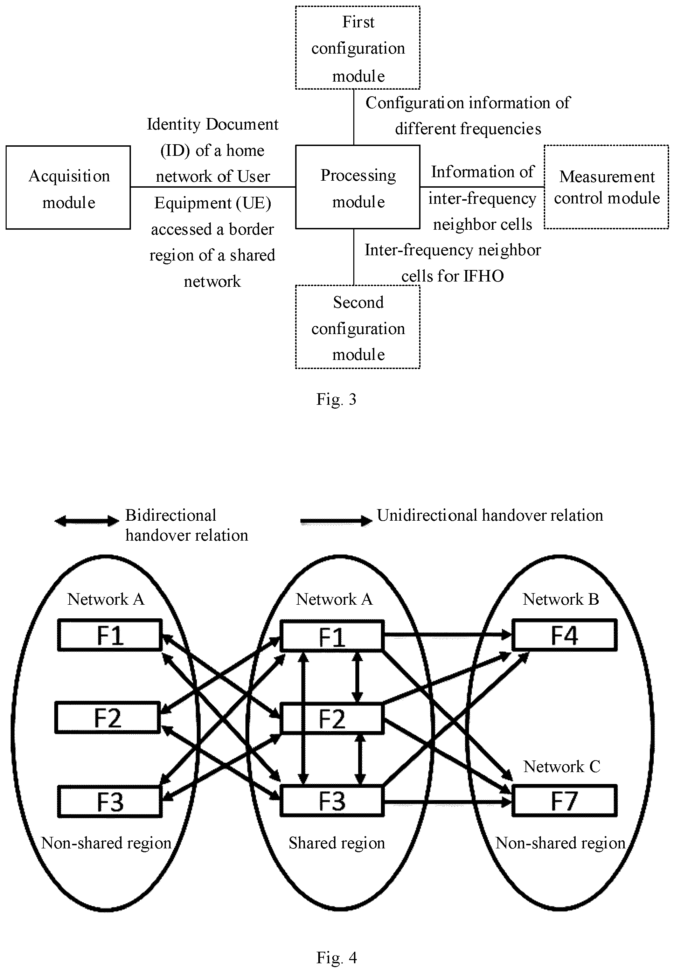

FIG. 3 is a schematic structural diagram of a device for determining inter-frequency neighbor cells according to an embodiment of the present disclosure. As shown in FIG. 3, the device at least includes an acquisition module and a processing module. The acquisition module is configured to acquire an Identity Document (ID) of a home network of User Equipment (UE) when monitoring that the UE accesses a border region of a shared network. The processing module is configured to process, based on configuration information of different frequencies for inter-frequency handover (IFHO) corresponding to the ID, information of neighbor cells to which the UE is able to perform handover, to obtain information of the inter-frequency neighbor cells containing information of neighbor cells with the different frequencies.

The device allows the UE to access the border region of the shared network in the acquisition module includes allowing the UE located in the border region of the shared network to access or perform handover to a border cell in the border region of the shared network, where the border cell is a primary serving cell.

In an example, in a UTRA network, the primary serving cell is a Primary Cell in an active set; and in E-UTRA and 5G NR networks, the primary serving cell is a Primary Cell (PCell).

In an example, the ID of the home network of the UE includes a PLMN ID of the PLMN which is the home network of the UE.

In an example, the device for determining inter-frequency neighbor cells further includes a first configuration module configured to allocate zero to a specified number of different frequencies to the PLMN of each operator in each primary serving cell in the border region of the shared network, to form configuration information of all different frequencies for IFHO. In an example, in the UTRA network, the specified number is a first specified number, such as 2 different frequencies; in the E-UTRA or 5G NR network, the specified number is a second specified number, such as 16 different frequencies.

In an example, the device for determining inter-frequency neighbor cells further includes a second configuration module configured to configure, based on the inter-frequency neighbor cells to which the UE of each operator may actually perform IFHO, information of the inter-frequency neighbor cells of each cell in the border region of the shared network as the information of the neighbor cells to which the UE is able to perform handover.

The processing module is configured to: identify, based on the PLMN ID of the PLMN which is the home network of the UE, different frequencies corresponding to the target border cell to which the UE accesses or performs handover in the configuration information of the different frequencies for IFHO of the PLMN; and filter, based on the different frequencies identified, all the different frequencies and inter-frequency neighbor cells contained in the information of the neighbor cells to which the UE is able to perform handover, to retain the neighbor cells with the different frequencies identified, and delete the neighbor cells without the different frequencies identified.

In an example, in the UTRA network, the number of the different frequencies filtered will not exceed the first specified number, such as 2; and in the E-UTRA or 5G NR network, the number of the different frequencies filtered will not exceed the second specified number, such as 16.

In an example, in the UTRA network, if the number of the neighbor cells in the filtered inter-frequency neighbor cells exceeds a third specified number (such as 32), the processing module is further configured to: sort the neighbor cells in the filtered inter-frequency neighbor cells based on priorities of the neighbor cells, and select the third specified number of neighbor cells (such as 32 neighbor cells) with high priority as the filtered inter-frequency neighbor cells. In an embodiment, the processing module is further configured to sort neighbor cells with the same priority in a configuration sequence from front to back.

With the device for determining inter-frequency neighbor cells provided in the present disclosure, in the UTRA network, the number of the inter-frequency neighbor cells in the determined information of the inter-frequency neighbor cells will not exceed the third specified number, such as 32, and the number of different frequencies will not exceed the first specified number, such as 2; and in the E-UTRA or 5G NR network, the number of different frequencies in the determined information of the inter-frequency neighbor cells will not exceed the second specified number, such as 16. According to the present disclosure, the different frequencies and the inter-frequency neighbor cells are utilized to the greatest extent, which reduces the measurement gaps of the UE, improves the success rate of IFHO and reduces the call drop rate.

In an example, the device for determining inter-frequency neighbor cells further includes a measurement control module configured to send the obtained information of the inter-frequency neighbor cells to the UE through a measurement control message, so as to enable the UE to measure the inter-frequency neighbor cells duly.

The present disclosure will be described below by specific embodiments.

In embodiment one, a UTRA network is taken as an example, and it is assumed that information of neighbor cells is determined by a Radio Network Controller (RNC). In embodiment one, the schematic diagram of IFHO in the border region of the shared carrier shown in FIG. 1 is taken as an example, a shared carrier is provided by an operator A, and other two operators B and C can use the carrier of the operator A only in a shared carrier region but not in a non-shared carrier region. The method for determining information of neighbor cells includes following steps.

The RNC first configures information of inter-frequency neighbor cells of each cell for handover according to the actual situation and planning, and configures different frequencies with which inter-frequency neighbor cells with different PLMN IDs can perform IFHO in the cells in the border region of the shared carrier.

In an example, configuration may be made in advance based on the inter-frequency neighbor cells to which the UE of each operator may actually perform IFHO. In this case, there is no need to consider the quantitative restriction of frequencies. As shown in FIG. 4, border cells F1, F2 and F3 in the shared region are all configured with inter-frequency neighbor cells with more than two frequencies. In FIG. 4, a double-headed arrow indicates a bidirectional handover relation, and a single-headed arrow indicates a unidirectional handover relation.

In an example, with reference to the description of FIG. 1, a CELL1 is taken as an example. Different frequencies configured for IFHO in the CELL1 include: frequencies F2 and F3 with which a network A may perform handover, frequencies F2 and F4 with which a network B may perform handover, and frequencies F2 and F7 with which a network C may perform handover,

In an example, each PLMN ID is the PLMN ID actually used in the shared carrier region. In embodiment one, the shared carrier is provided by the operator A, and the operators B and C may access or use the carrier of the operator A only in a shared region but not in a non-shared carrier region.

In a case that User Equipment (UE) of a home PLMN initially accesses a border cell in the shared carrier region and performs hard handover or soft handover to the border cell, and the border cell is a primary serving cell, the method for determining inter-frequency neighbor cells is enabled.

In an example, the initial access to a border cell in the shared carrier region may be implemented through a Radio Resource Control (RRC) connection request and a CELL UPDATE request, and the border cell is the primary serving cell in an active set. The step in which the UE performs hard handover or soft handover to the border cell and the border cell is a primary serving cell includes following steps that the UE performs hard handover from other cells to the border cell which is the primary serving cell; and the border cell is added as a cell in the active set through an active set update process and is the primary serving cell in the active set.

The inter-frequency neighbor cells of all the cells in the active set are then merged, and lists of the inter-frequency neighbor cells of a plurality of cells are merged to form a first list, and it is assumed that the first list obtained after the merging is called a list of inter-frequency neighbor cells at a cell level of the UE.

In an example, since cells in the active set may have repetitive neighbor cells, the repetitive neighbor cells will be deleted in the process of forming the first list by merging. In the merged first list, there may be more than 32 inter-frequency neighbor cells, and more than two different frequencies.

Subsequently, the merged first list is filtered based on the configuration information of the different frequencies with which inter-frequency neighbor cells with different PLMN IDs can perform IFHO, and the neighbor cells without the different frequencies in the configuration information of the different frequencies are deleted to form a second list.

The second list may be called a list of inter-frequency neighbor cells at a UE level of the UE. In the second list, there may be at most two different frequencies, but more than 32 inter-frequency neighbor cells.

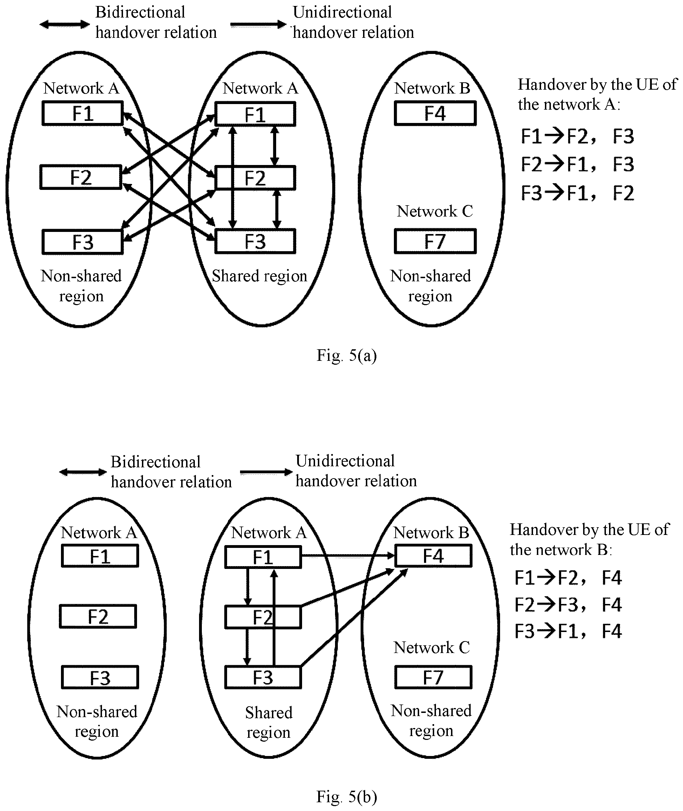

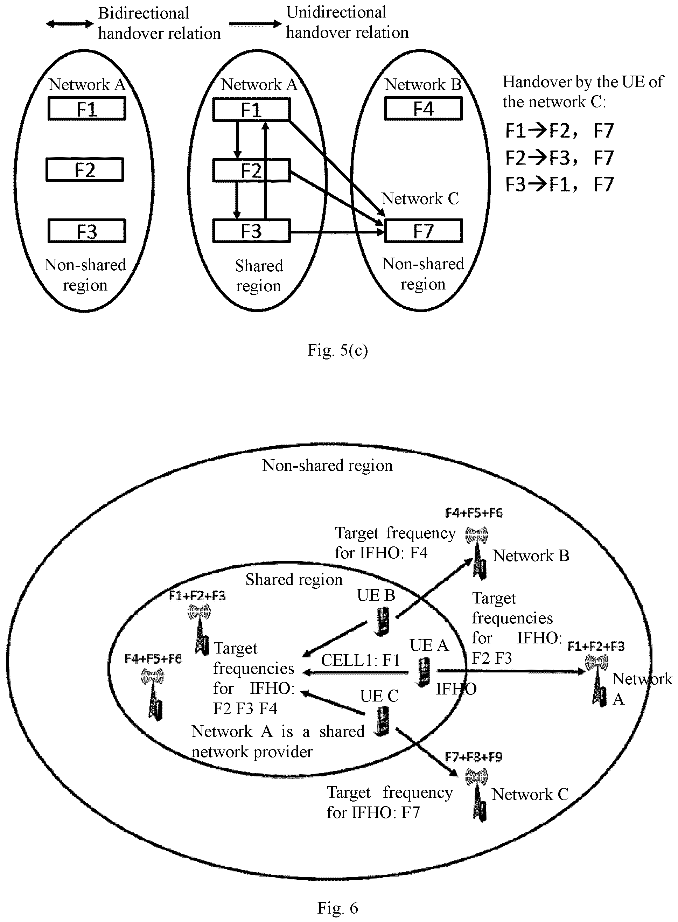

With reference to the schematic diagram of IFHO in the border region of the shared carrier shown in FIG. 1, FIG. 5(a) is a schematic diagram of relations of neighbor cells in a second list for User Equipment (UE) of a network A according to embodiment one of the present disclosure, FIG. 5(b) is a schematic diagram of relations of neighbor cells in a second list for UE of a network B according to embodiment one of the present disclosure, and FIG. 5(c) is a schematic diagram of relations of neighbor cells in a second list for UE of a network C according to embodiment one of the present disclosure.

In an example, in a case that there are more than 32 inter-frequency neighbor cells in the second list, the inter-frequency neighbor cells in the second list are sorted based on priorities of the neighbor cells and a configuration sequence of all inter-frequency neighbor cells, with those having the highest priority ranking first, and those having the same priority ranking in the configuration sequence, and information of the inter-frequency neighbor cells ranked behind a first 32 inter-frequency neighbor cells in the second list is deleted.

Finally, the RNC will send the processed information of the inter-frequency neighbor cells to the UE (i.e., the second list to the UE through a measurement control message), so as to enable the UE to measure the inter-frequency neighbor cells duly.

In embodiment two, a UTRA network is taken as an example, and it is assumed that information of neighbor cells is determined by an RNC. In embodiment two, the schematic diagram of IFHO in the border region of the shared carrier shown in FIG. 6 is taken as an example, a shared carrier is provided by an operator A and an operator B. In a shared carrier region, User Equipment (UE) of the operator A can use the carrier of the operator B, UE of the operator B can use the carrier of the operator A, and UE of operator C can use the carriers of the operators A and B, while in a non-shared carrier region, the operators A, B and C can use their respective carriers only. The method for determining information of neighbor cells includes following steps.

The RNC first configures information of inter-frequency neighbor cells of each cell for handover according to the actual situation and planning, and configures different frequencies with which inter-frequency neighbor cells with different PLMN IDs can perform IFHO in the cells in the border region of the shared carrier.

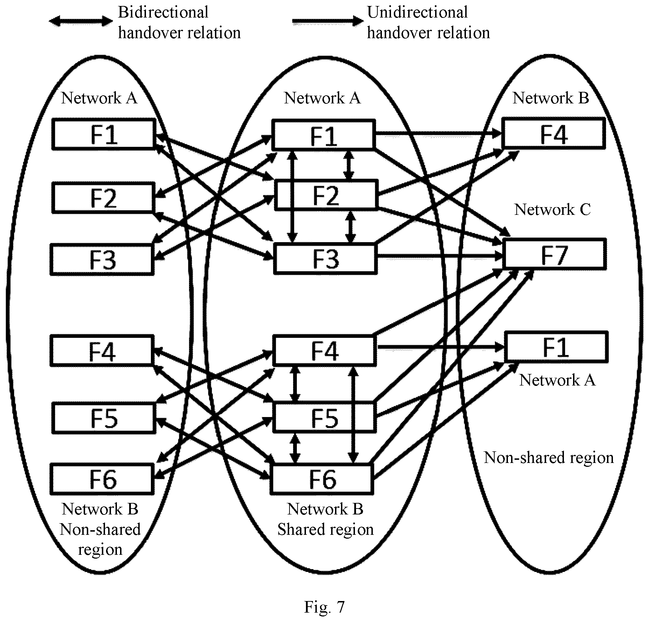

In an example, configuration may be made in advance based on the inter-frequency neighbor cells to which the UE of each operator may actually perform IFHO. In this case, there is no need to consider the quantitative restriction of frequencies. As shown in FIG. 7, border cells F1, F2, F3, F4, F5 and F6 in the shared region are all configured with inter-frequency neighbor cells with more than two frequencies. In FIG. 7, a double-headed arrow indicates a bidirectional handover relation, and a single-headed arrow indicates a unidirectional handover relation.

In an example, with reference to FIG. 6, a CELL1 is taken as an example, different frequencies configured for IFHO in the CELL1 include: frequencies F2 and F3 with which a network A may perform handover, frequencies F2 and F4 with which a network B may perform handover, and frequencies F2 and F7 at which a network C may perform handover,

In this embodiment, the UE of the operators A, B and C may perform IFHO to the home PLMN at the border of the shared region. Each PLMN is a PLMN network actually used in the shared carrier region. In embodiment two, the shared carrier is provided by the operators A and B. In the shared carrier region, the UE of the operator A can use the carrier of the operator B, the operator B can use the carrier of the operator A, and the operator C can use the carriers of the operators A and B. In a non-shared carrier region, the operators A, B and C can use their respective carriers only.

In a case that User Equipment (UE) of a home PLMN initially accesses a border cell in the shared carrier region and performs hard handover or soft handover to the border cell, and the border cell is a primary serving cell, the method for determining inter-frequency neighbor cells is enabled.

In an example, the initial access to a border cell in the shared carrier region may be realized through an RRC connection request and a CELL UPDATE request, and the border cell is the primary serving cell in an active set. In an embodiment, the step in which the UE performs hard handover or soft handover to the border cell and the border cell is a primary serving cell includes following steps that the UE performs hard handover from other cells to the border cell which is a primary serving cell; and the border cell is added as a cell in the active set through an active set update process and is the primary serving cell in the active set.

Subsequently, the inter-frequency neighbor cells of all the cells in the active set are merged, and lists of the inter-frequency neighbor cells of a plurality of cells are merged to form a first list, and it is assumed that the first list obtained after the merging is called a list of inter-frequency neighbor cells at a cell level of the UE.

In an example, since cells in the active set may have repetitive neighbor cells, the repetitive neighbor cells will be deleted in the process of forming the first list by merging. In the merged first list, there may be more than 32 inter-frequency neighbor cells, and more than two different frequencies.

The merged first list is filtered based on the configuration information of the different frequencies with which inter-frequency neighbor cells with different PLMN IDs can perform IFHO, and the neighbor cells without the different frequencies in the configuration information of the different frequencies are deleted to form a second list.

The second list may be called a list of inter-frequency neighbor cells at a UE level of the UE. In the second list, there may be at most two different frequencies, but more than 32 inter-frequency neighbor cells.

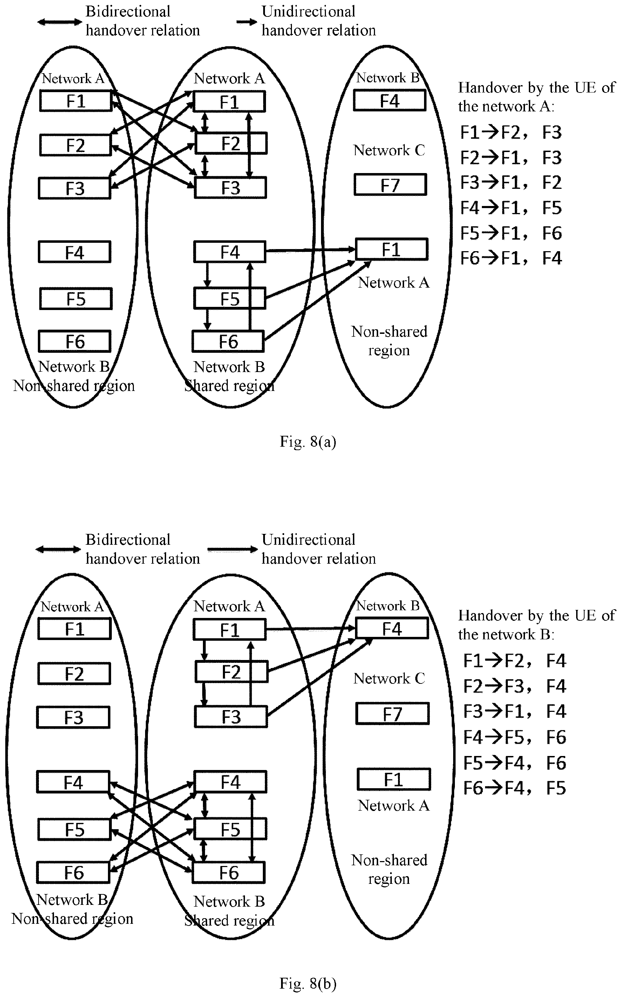

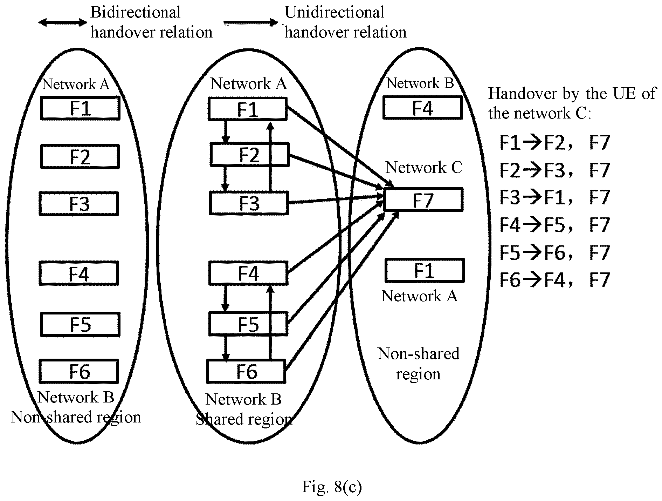

With reference to the schematic diagram of IFHO in the border region of the shared carrier shown in FIG. 6, FIG. 8(a) is a schematic diagram of relations of neighbor cells in a second list for User Equipment (UE) of a network A according to embodiment two of the present disclosure, FIG. 8(b) is a schematic diagram of relations of neighbor cells in a second list for UE of a network B according to embodiment two of the present disclosure, and FIG. 8(c) is a schematic diagram of relations of neighbor cells in a second list for UE of a network C according to embodiment two of the present disclosure.

In an example, in a case that there are more than 32 inter-frequency neighbor cells in the second list, the inter-frequency neighbor cells in the second list are sorted based on priorities of the neighbor cells and a configuration sequence of all inter-frequency neighbor cells, with those having the highest priority ranking first and those having the same priority ranking in the configuration sequence, and information of the inter-frequency neighbor cells ranked behind a first 32 inter-frequency neighbor cells in the second list is deleted.

Finally, the RNC will send the processed information of the inter-frequency neighbor cells to the UE (i.e., the second list to the UE through a measurement control message), so as to enable the UE to measure the inter-frequency neighbor cells duly.

In embodiment three, an E-UTRA or 5G NR network is taken as an example, and it is assumed that information of neighbor cells is determined by an Evolved Nodeb (eNodeb) or a Generation Nodeb (gNodeb). In embodiment three, the schematic diagram of IFHO in the border region of the shared carrier shown in FIG. 9 is taken as an example, a shared carrier is provided by an operator A, other four operators B, C, D and E can use the carrier of the operator A only in a shared carrier region but not in a non-shared carrier region. The method for determining information of neighbor cells includes following steps.

The eNodeb or gNodeb first configures information of inter-frequency neighbor cells of each cell for handover according to the actual situation and planning, and configures different frequencies with which inter-frequency neighbor cells with different PLMN IDs can perform IFHO in the cells in the border region of the shared carrier.

In an example, configuration may be made in advance based on the inter-frequency neighbor cells to which the UE of each operator may actually perform IFHO. In this case, there is no need to consider the quantitative restriction of frequencies. As shown in FIG. 10, border cells F1, F2, F3 and F4 in the shared region are all configured with inter-frequency neighbor cells with 11 frequencies. In FIG. 10, a double-headed arrow indicates a bidirectional handover relation, and a single-headed arrow indicates a unidirectional handover relation.

In an example, with reference to FIG. 9, a CELL1 is taken as an example, different frequencies configured for IFHO in the CELL1 include: frequencies F2, F3 and F4 with which a network A may perform handover, frequencies F2, F5 and F6 with which a network B may perform handover, frequencies F2, F9 and F10 with which a network C may perform handover, frequencies F2, F13 and F14 with which a network D may perform handover, and frequencies F2, F17 and F18 with which a network E may perform handover.

In this embodiment, each PLMN ID is the PLMN ID actually used in the shared carrier region. In embodiment three, a shared carrier is provided by the operator A, and the other four operators B, C, D and E may access or use the carrier of the operator A in a shared carrier region. In a non-shared region, the operators B, C, D and E cannot use the shared carrier but use their respective carriers only.

In a case that User Equipment (UE) of a home PLMN initially accesses a border cell in the shared carrier region and performs handover to the border cell, and the border cell is a primary serving cell, the method for determining inter-frequency neighbor cells is enabled.

In an example, the initial access to a border cell in the shared carrier region may be realized through an RRC connection request and an RRC RE-CREATE request. The step of performing handover to the border cell includes that the UE performs handover from other cells to the border cell which is a primary serving cell.

In an example, the list of different frequencies of the border cell for the PLMN of the UE is a list of different frequencies at the cell level of the UE.

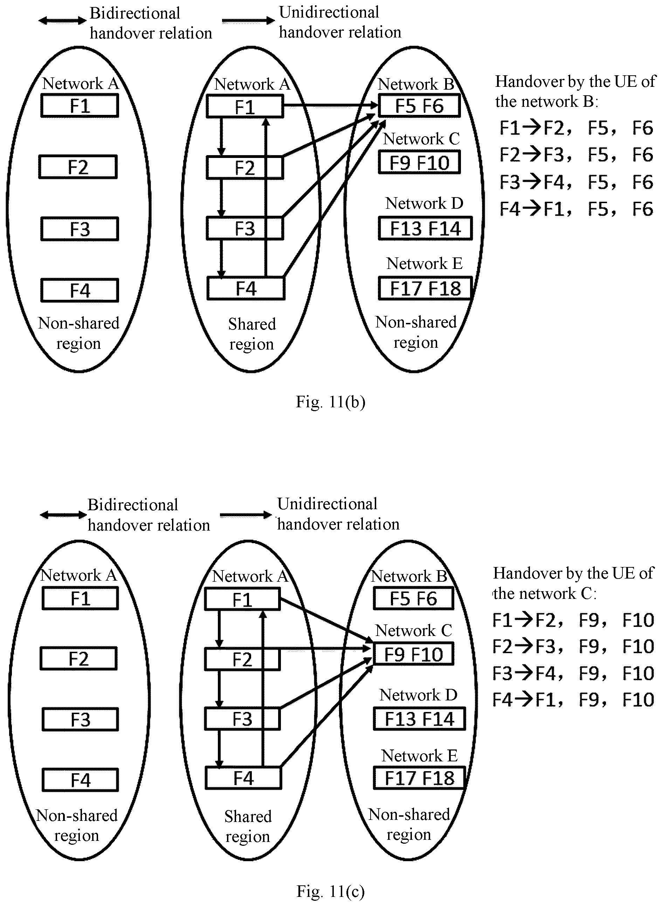

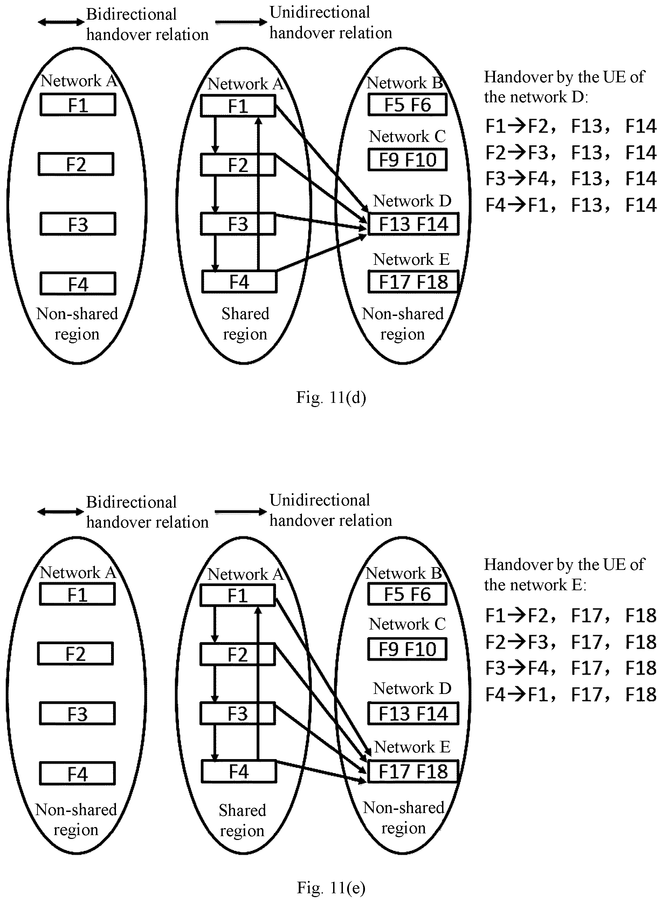

With reference to the schematic diagram of IFHO in the border region of the shared carrier shown in FIG. 9, FIG. 11(a) is a schematic diagram of relations of neighbor cells in a second list for User Equipment (UE) of a network A according to embodiment three of the present disclosure, FIG. 11(b) is a schematic diagram of relations of neighbor cells in a second list for UE of a network B according to embodiment three of the present disclosure, FIG. 11(c) is a schematic diagram of relations of neighbor cells in a second list for UE of a network C according to embodiment three of the present disclosure, FIG. 11(d) is a schematic diagram of relations of neighbor cells in a second list for UE of a network D according to embodiment three of the present disclosure, and FIG. 11(e) is a schematic diagram of relations of neighbor cells in a second list for UE of a network E according to embodiment three of the present disclosure.

Finally, the eNodeb or gNodeb will send the different frequencies included in the processed information of the inter-frequency neighbor cells to the UE through a measurement control message, so as to enable the UE to measure the inter-frequency neighbor cells.

After the UE reports the measurement results, the eNode or gNodeb will perform matching among the configured neighbor cells, and perform handover after a successful match. In the present disclosure, the frequencies to be measured by the UE in each PLMN have been limited and differentiated, so that only the inter-frequency neighbor cells in the list of different frequencies at the cell level of the UE are matched at a neighbor cell matching stage, to avoid handover to neighbor cells with other frequencies.

## Claims

1. A method for determining inter-frequency neighbor cells, performed by a Radio Network Controller and/or a base station, comprising:
acquiring a Public Land Mobile Network Identity Document, PLMN ID, of a home network of User Equipment, UE, accessing a border region of a shared network (210), the border region being a region where the coverage areas of base stations shared by multiple mobile network operators overlap with the coverage areas of base stations operated by a single mobile network operator, the shared network being a radio access network shared by the multiple mobile network operators; and
processing, based on configuration information of different frequencies for inter-frequency handover, IFHO, corresponding to the PLMN ID, information of neighbor cells to which the UE is able to perform handover, to obtain information of the inter-frequency neighbor cells containing information of neighbor cells with the different frequencies (220);
**characterized in that**,
prior to acquiring a PLMN ID of a home network of UE accessing a border region of a shared network, further comprising:
allowing the UE to access the border region of the shared network, which comprises:
allowing the UE located in the border region of the shared network to access or perform handover to a target border cell in the border region of the shared network, wherein the target border cell is a primary serving cell;
wherein processing information of neighbor cells to which the UE is able to perform handover comprises:
identifying, based on the PLMN ID of the PLMN which is the home network of the UE, different frequencies corresponding to the target border cell to which the UE accesses or performs handover in the configuration information of the different frequencies for IFHO of the PLMN; and
filtering, based on the different frequencies identified, all the different frequencies and inter-frequency neighbor cells contained in the information of the neighbor cells to which the UE is able to perform handover, and retaining neighbor cells with the different frequencies identified and deleting neighbor cells without the different frequencies identified.

2. The method of claim 1, wherein
the primary serving cell is a Primary Cell, PCell, in an active set in a Universal Terrestrial Radio Access, UTRA, network; and
the primary serving cell is a PCell in an Evolved Universal Terrestrial Radio Access, E-UTRA, network and a 5^{th} Generation Wireless Systems New Radio, 5G NR, network.

3. The method of claim 1, in response to a number of the neighbor cells in the filtered inter-frequency neighbor cells exceeding a third specified number in the UTRA network, further comprising:
sorting the neighbor cells in the filtered inter-frequency neighbor cells based on priorities of the neighbor cells, and selecting the third specified number of neighbor cells from a highest priority as the filtered inter-frequency neighbor cells.

4. The method of claim 1 or 3, prior to processing information of neighbor cells to which the UE is able to perform handover, further comprising:
allocating zero to a specified number of different frequencies to the PLMN of each operator in each primary serving cell in the border region of the shared network to form configuration information of all different frequencies for IFHO.

5. The method of claim 1 or 3, prior to processing information of neighbor cells to which the UE is able to perform handover, further comprising:
configuring, based on the inter-frequency neighbor cells to which the UE of each operator actually performs IFHO, information of the inter-frequency neighbor cells of each cell in the border region of the shared network as the information of the neighbor cells to which the UE is able to perform handover.

6. The method of claim 5, wherein the information of the neighbor cells to which the UE is able to perform handover in the UTRA network comprises information of neighbor cells after all cells in the active set are merged.

7. The method of claim 1, further comprising:
sending the obtained information of the inter-frequency neighbor cells to the UE through a measurement control message.

8. A computer-readable storage medium storing a computer-executable instruction which, when executed by a processor, causes the processor to carry out the method for determining inter-frequency neighbor cells of any one of claims 1 to 7.

9. A device for determining inter-frequency neighbor cells, comprising:
an acquisition module, configured to acquire a Public Land Mobile Network Identity Document, PLMN ID, of a home network of User Equipment, UE, in response to monitoring that the UE accesses a border region of a shared network, the border region being a region where the coverage areas of base stations shared by multiple mobile network operators overlap with the coverage areas of base stations operated by a single mobile network operator, the shared network being a radio access network shared by the multiple mobile network operators; and
a processing module, configured to process, based on configuration information of different frequencies for inter-frequency handover, IFHO, corresponding to the PLMN ID, information of neighbor cells to which the UE is able to perform handover, to obtain information of the inter-frequency neighbor cells containing information of neighbor cells with the different frequencies;
**characterized in that**,
the UE accesses a border region of a shared network comprises:
allowing the UE located in the border region of the shared network to access or perform handover to a target border cell in the border region of the shared network, where the target border cell is a primary serving cell;
wherein the processing module is further configured to:
identify, based on the PLMN ID of the PLMN which is the home network of the UE, different frequencies corresponding to the target border cell to which the UE accesses or performs handover in the configuration information of the different frequencies for IFHO of the home PLMN; and
filter, based on the different frequencies identified, all the different frequencies and inter-frequency neighbor cells contained in the information of the neighbor cells to which the UE is able to perform handover, and retain neighbor cells with the different frequencies identified and delete neighbor cells without the different frequencies identified.

10. The device of claim 9, wherein
the primary serving cell is a Primary Cell, PCell, in an active set in a Universal Terrestrial Radio Access, UTRA, network; and
the primary serving cell is a PCell in an Evolved Universal Terrestrial Radio Access, E-UTRA, network and a 5^{th} Generation Wireless Systems New Radio, 5G NR, network.

11. The device of claim 9, wherein the processing module is further configured to:
in response to a number of the neighbor cells in the filtered inter-frequency neighbor cells exceeding a third specified number in the UTRA network, sort the neighbor cells in the filtered inter-frequency neighbor cells based on priorities of the neighbor cells, and select the third specified number of neighbor cells from a highest priority as the filtered inter-frequency neighbor cells.

## Patentansprüche

1. Verfahren zum Bestimmen von Inter-Frequenz-Nachbarzellen, das von einem "Radio Network Controller" und/oder einer Basisstation durchgeführt wird, umfassend:
Erfassen eines "Public Land Mobile Network Identity Document", PLMN-ID, eines Heimatnetzes eines Benutzergeräts, UE, das auf eine Grenzregion eines gemeinsam genutzten Netzes (210) zugreift, wobei die Grenzregion eine Region ist, in der sich die Versorgungsbereiche von Basisstationen, die von mehreren Mobilfunknetzbetreibern gemeinsam genutzt werden, mit den Versorgungsbereichen von Basisstationen überschneiden, die von einem einzigen Mobilfunknetzbetreiber betrieben werden, wobei das gemeinsam genutzte Netz ein Funkzugangsnetz ist, das von den mehreren Mobilfunknetzbetreibern gemeinsam genutzt wird; und
Verarbeiten, auf der Grundlage von Auslegungsinformationen verschiedener Frequenzen für Inter-Frequenz-Übergabe, IFHO, die dem PLMN-ID entsprechen, von Informationen über Nachbarzellen, zu denen das UE Übergabe durchführen kann, zum Erhalten von Informationen über die Inter-Frequenz-Nachbarzellen, die Informationen über Nachbarzellen mit den verschiedenen Frequenzen enthalten (220);
**dadurch gekennzeichnet, dass**
das Verfahren vor dem Erfassen eines PLMN-ID eines Heimatnetzes eines UE, das auf eine Grenzregion eines gemeinsam genutzten Netzes zugreift, ferner umfasst:
Ermöglichen, für das UE, auf die Grenzregion des gemeinsam genutzten Netzes zuzugreifen, was folgende Vorgänge umfasst:
Ermöglichen, dass das UE, das sich in der Grenzregion des gemeinsam genutzten Netzes befindet, auf eine Ziel-Grenzzelle in der Grenzregion des gemeinsam genutzten Netzes zugreift oder Übergabe an diese durchführt, wobei die Ziel-Grenzzelle eine primäre bedienende Zelle ist;
wobei das Verarbeiten von Informationen über Nachbarzellen, zu denen das UE Übergabe durchführen kann, umfasst:
Identifizieren, auf der Grundlage des PLMN-ID des PLMN, das das Heimatnetz des UE ist, verschiedener Frequenzen, die der Ziel-Grenzzelle entsprechen, auf die das UE zugreift oder für die es Übergabe durchführt, in den Auslegungsinformationen über die verschiedenen Frequenzen für IFHO des PLMN; und
Filtern, auf der Grundlage der identifizierten verschiedenen Frequenzen, aller verschiedenen Frequenzen und Inter-Frequenz-Nachbarzellen, die in den Informationen über die Nachbarzellen enthalten sind, zu denen das UE Übergabe durchführen kann, und Beibehalten von Nachbarzellen mit den identifizierten verschiedenen Frequenzen und Löschen von Nachbarzellen ohne die identifizierten verschiedenen Frequenzen.

2. Verfahren nach Anspruch 1, wobei
die primäre bedienende Zelle eine "Primary Cell", PCell, in einem aktiven Satz in einem "Universal Terrestrial Radio Access"-, UTRA-, Netz ist; und
die primäre bedienende Zelle eine PCell in einem "Evolved Universal Terrestrial Radio Access"-, E-UTRA-, Netz und einem "5th Generation Wireless Systems New Radio"-, 5G NR-, Netz ist.

3. Verfahren nach Anspruch 1, ferner umfassend, als Reaktion darauf, dass eine Anzahl der Nachbarzellen aus den gefilterten Inter-Frequenz-Nachbarzellen eine dritte festgelegte Anzahl im UTRA-Netz überschreitet:
Sortieren der Nachbarzellen aus den gefilterten Inter-Frequenz-Nachbarzellen auf der Grundlage der Prioritäten der Nachbarzellen und Auswählen der dritten festgelegten Anzahl von Nachbarzellen mit der höchsten Priorität als die gefilterten Inter-Frequenz-Nachbarzellen.

4. Verfahren nach Anspruch 1 oder 3, ferner umfassend, vor dem Verarbeiten von Informationen über Nachbarzellen, zu denen das UE Übergabe durchführen kann:
Zuweisen von null für eine festgelegte Anzahl verschiedener Frequenzen an das PLMN jedes Betreibers in jeder primären bedienenden Zelle in der Grenzregion des gemeinsam genutzten Netzes zum Bilden von Auslegungsinformationen aller verschiedenen Frequenzen für IFHO.

5. Verfahren nach Anspruch 1 oder 3, ferner umfassend, vor dem Verarbeiten von Informationen über Nachbarzellen, zu denen das UE Übergabe durchführen kann:
Auslegen, auf der Grundlage der Inter-Frequenz-Nachbarzellen, zu denen das UE jedes Betreibers tatsächlich IFHO durchführt, von Informationen über die Inter-Frequenz-Nachbarzellen jeder Zelle in der Grenzregion des gemeinsam genutzten Netzes als die Informationen über die Nachbarzellen, zu denen das UE Übergabe durchführen kann.

6. Verfahren nach Anspruch 5, wobei die Informationen über die Nachbarzellen, zu denen das UE im UTRA-Netz Übergabe durchführen kann, Informationen über Nachbarzellen umfassen, nachdem alle Zellen in der aktiven Gruppe zusammengeführt wurden.

7. Verfahren nach Anspruch 1, ferner umfassend:
Senden der erhaltenen Informationen über die Inter-Frequenz-Nachbarzellen an das UE durch eine Messkontrollnachricht.

8. Computerlesbares Speichermedium, das eine computerausführbare Anweisung speichert, die bei ihrer Ausführung durch einen Prozessor den Prozessor veranlasst, das Verfahren zum Bestimmen von Inter-Frequenz-Nachbarzellen nach einem der Ansprüche 1 bis 7 durchzuführen.

9. Vorrichtung zum Bestimmen von Inter-Frequenz-Nachbarzellen, umfassend:
ein Erfassungsmodul, das dafür ausgelegt ist, ein "Public Land Mobile Network Identity Document", PLMN-ID, eines Heimatnetzes eines Benutzergeräts, UE, als Reaktion auf die Überwachung, dass das UE auf eine Grenzregion eines gemeinsam genutzten Netzes zugreift, zu erfassen, wobei die Grenzregion eine Region ist, in der sich die Versorgungsbereiche von Basisstationen, die von mehreren Mobilfunknetzbetreibern gemeinsam genutzt werden, mit den Versorgungsbereichen von Basisstationen, die von einem einzigen Mobilfunknetzbetreiber betrieben werden, überschneiden, wobei das gemeinsam genutzte Netz ein Funkzugangsnetz ist, das von den mehreren Mobilfunknetzbetreibern gemeinsam genutzt wird; und
ein Verarbeitungsmodul, das dafür ausgelegt ist, auf der Grundlage von Auslegungsinformationen verschiedener Frequenzen für Inter-Frequenz-Übergabe, IFHO, die dem PLMN-ID entsprechen, Informationen über Nachbarzellen, zu denen das UE Übergabe durchführen kann, zum Erhalten von Informationen über die Inter-Frequenz-Nachbarzellen, die Informationen über Nachbarzellen mit den verschiedenen Frequenzen enthalten, zu verarbeiten;
**dadurch gekennzeichnet, dass**
der Zugriff des UE auf eine Grenzregion eines gemeinsam genutzten Netzes umfasst:
Ermöglichen, dass das UE, das sich in der Grenzregion des gemeinsam genutzten Netzes befindet, auf eine Ziel-Grenzzelle in der Grenzregion des gemeinsam genutzten Netzes zugreift oder Übergabe an diese durchführt, wobei die Ziel-Grenzzelle eine primäre bedienende Zelle ist;
wobei das Verarbeitungsmodul ferner für folgende Vorgänge ausgelegt ist:
Identifizieren, auf der Grundlage des PLMN-ID des PLMN, welches das Heimatnetz des UE ist, verschiedener Frequenzen, die der Ziel-Grenzzelle entsprechen, auf die das UE zugreift oder an die es Übergabe durchführt, in den Auslegungsinformationen über die verschiedenen Frequenzen für IFHO des Heimat-PLMN; und
Filtern, auf der Grundlage der identifizierten verschiedenen Frequenzen, aller verschiedenen Frequenzen und Inter-Frequenz-Nachbarzellen, die in den Informationen über die Nachbarzellen enthalten sind, zu denen das UE Übergabe durchführen kann, und Beibehalten von Nachbarzellen mit den identifizierten verschiedenen Frequenzen und Löschen von Nachbarzellen ohne die identifizierten verschiedenen Frequenzen.

10. Vorrichtung nach Anspruch 9, wobei
die primäre bedienende Zelle eine "Primary Cell", PCell, in einem aktiven Satz in einem "Universal Terrestrial Radio Access"-, UTRA-, Netz ist; und
die primäre bedienende Zelle eine PCell in einem "Evolved Universal Terrestrial Radio Access"-, E-UTRA-, Netz und einem "5th Generation Wireless Systems New Radio"-, 5G NR-, Netz ist.

11. Vorrichtung nach Anspruch 9, wobei das Verarbeitungsmodul ferner für folgende Vorgänge ausgelegt ist:
als Reaktion darauf, dass eine Anzahl der Nachbarzellen aus den gefilterten Inter-Frequenz-Nachbarzellen eine dritte festgelegte Anzahl im UTRA-Netz überschreitet, Sortieren der Nachbarzellen aus den gefilterten Inter-Frequenz-Nachbarzellen auf der Grundlage von Prioritäten der Nachbarzellen und Auswählen der dritten festgelegten Anzahl von Nachbarzellen mit der höchsten Priorität als die gefilterten Inter-Frequenz-Nachbarzellen.

## Revendications

1. Procédé pour déterminer des cellules voisines inter-fréquences, exécuté par un contrôleur de réseau radio et/ou une station de base, comprenant :
l'acquisition d'un document d'identité de réseau mobile terrestre publique, PLMN ID, d'un réseau domestique d'un équipement utilisateur, UE, accédant à une région de frontière d'un réseau partagé (210), la région de frontière étant une région dans laquelle les zones de couverture des stations de base partagées par de multiples opérateurs de réseau mobile chevauchent les zones de couverture des stations de base exploitées par un seul opérateur de réseau mobile, le réseau partagé étant un réseau d'accès radio partagé par les multiples opérateurs de réseau mobile ; et
le traitement, sur la base d'informations de configuration de différentes fréquences pour le transfert inter-fréquences, IFHO, correspondant aux informations PLMN ID des cellules voisines vers lesquelles l'UE peut exécuter un transfert, pour obtenir des informations sur les cellules voisines inter-fréquences contenant des informations sur des cellules voisines ayant les différentes fréquences (220) ;
**caractérisé en ce que**
avant l'acquisition d'un PLMN ID d'un réseau domestique de l'UE accédant à une région de frontière d'un réseau partagé, il comprend en outre :
l'autorisation de l'UE à accéder à la région de frontière du réseau partagé, qui comprend :
l'autorisation de l'UE situé dans la région de frontière du réseau partagé à accéder à ou à exécuter un transfert vers une cellule de frontière cible du réseau partagé, la cellule de frontière cible étant une cellule de desserte principale ;
le traitement d'informations sur des cellules voisines vers lesquelles l'UE peut exécuter un transfert comprenant :
l'identification, sur la base du PLMN ID du PLMN qui est le réseau domestique de l'UE, de différentes fréquences correspondant à la cellule de frontière cible à laquelle l'UE accède ou vers laquelle il exécute un transfert dans les informations de configuration des différentes fréquences pour l'IFHO du PLMN ; et
le filtrage, sur la base des différentes fréquences identifiées, de toutes les fréquences différentes et des cellules voisines inter-fréquences contenues dans les informations des cellules voisines vers lesquelles l'UE peut exécuter un transfert, et la conservation des cellules voisines ayant les différentes fréquences identifiées et l'effacement des cellules voisines ne présentant pas les différentes fréquences identifiées.

2. Procédé selon la revendication 1, dans lequel
la cellule de desserte principale est une cellule principale, Pcell, dans un ensemble actif sur un réseau d'accès radio terrestre universel, UTRA ; et
la cellule de desserte principale est une Pcell sur un réseau d'accès radio terrestre universel évolué, E-UTRA, et un nouveau réseau radio de systèmes sans fil de 5ème génération, 5G NR.

3. Procédé selon la revendication 1, comprenant en outre, en réponse au fait qu'un certain nombre des cellules voisines parmi les cellules voisines inter-fréquences filtrées excède un troisième nombre spécifié sur le réseau UTRA :
le tri des cellules voisines parmi les cellules voisines inter-fréquences filtrées sur la base des priorités des cellules voisines, et la sélection du troisième nombre spécifié de cellules voisines d'une priorité la plus élevée en tant que cellules voisines inter-fréquences filtrées.

4. Procédé selon la revendication 1 ou 3, comprenant en outre, avant le traitement d'informations sur les cellules voisines vers lesquelles l'UE peut exécuter un transfert :
l'allocation de zéro à un nombre spécifié de fréquences différentes au PLMN de chaque opérateur dans chaque cellule de desserte principale dans la région de frontière du réseau partagé afin de former des informations de configuration de toutes les fréquences différentes pour l'IFHO.

5. Procédé selon la revendication 1 ou 3, comprenant en outre, avant le traitement d'informations sur les cellules voisines vers lesquelles l'UE peut exécuter un transfert :
la configuration, sur la base des cellules voisines inter-fréquences vers lesquelles l'UE de chaque opérateur exécute réellement un IFHO, d'informations des cellules voisines inter-fréquences de chaque cellule de la région de frontière du réseau partagé en tant qu'informations des cellules voisines vers lesquelles l'UE peut exécuter un transfert.

6. Procédé selon la revendication 5, dans lequel les informations sur les cellules voisines vers lesquelles l'UE peut exécuter un transfert sur le réseau UTRA comprennent les informations sur les cellules voisines après la fusion de toutes les cellules de l'ensemble actif.

7. Procédé selon la revendication 1, comprenant en outre :
l'envoi des informations obtenues sur les cellules voisines inter-fréquences à l'UE via un message de commande de mesure.

8. Support de stockage lisible par ordinateur, stockant une instruction exécutable par ordinateur qui, lorsqu'elle est exécutée par un processeur, fait en sorte que le processeur exécute le procédé pour déterminer des cellules voisines inter-fréquences selon l'une quelconque des revendications 1 à 7.

9. Dispositif pour déterminer des cellules voisines inter-fréquences, comprenant :
un module d'acquisition, configuré pour acquérir un document d'identité de réseau mobile terrestre publique, PLMN ID, d'un réseau domestique d'un équipement utilisateur, UE, en réponse à la surveillance du fait que cet UE accède à une région de frontière d'un réseau partagé, la région de frontière étant une région dans laquelle les zones de couverture des stations de base partagées par de multiples opérateurs de réseau mobile chevauchent les zones de couverture des stations de base exploitées par une seul opérateur de réseau mobile, le réseau partagé étant un réseau d'accès radio partagé par les multiples opérateurs de réseau mobile ; et
un module de traitement, configuré pour traiter, sur la base d'informations de configuration de différentes fréquences pour le transfert inter-fréquences, IFHO, correspondant aux informations PLMN ID des cellules voisines vers lesquelles l'UE peut exécuter un transfert, pour obtenir des informations sur les cellules voisines inter-fréquences contant des informations sur des cellules voisines ayant les différentes fréquences ;
**caractérisé en ce que**
le fait que l'UE accède à une région de frontière du réseau partagé comprend :
l'autorisation de l'UE situé dans la région de frontière du réseau partagé à accéder à ou à exécuter un transfert vers une cellule de frontière cible du réseau partagé, où la cellule de frontière cible est une cellule de desserte principale ;
le module de traitement étant en outre configuré pour :
identifier, sur la base du PLMN ID du PLMN qui est le réseau domestique de l'UE, différentes fréquences correspondant à la cellule de frontière cible à laquelle l'UE accède ou vers laquelle il exécute un transfert dans les informations de configuration des différentes fréquences pour l'IFHO du PLMN domestique ; et
filtrer, sur la base des différentes fréquences identifiées, toutes les fréquences différentes et les cellules voisines inter-fréquences contenues dans les informations des cellules voisines vers lesquelles l'UE peut exécuter un transfert, et conserver les cellules voisines ayant les différentes fréquences identifiées et effacer les cellules voisines ne présentant pas les différentes fréquences identifiées.

10. Dispositif selon la revendication 9, dans lequel
la cellule de desserte principale est une cellule principale, Pcell, dans un ensemble actif sur un réseau d'accès radio terrestre universel, UTRA ; et
la cellule de desserte principale est une Pcell sur un réseau d'accès radio terrestre universel évolué, E-UTRA, et un nouveau réseau radio de systèmes sans fil de 5ème génération, 5G NR.

11. Dispositif selon la revendication 9, dans lequel le module de traitement est en outre configuré pour :
en réponse au fait qu'un certain nombre des cellules voisines parmi les cellules voisines inter-fréquences filtrées excède un troisième nombre spécifié sur le réseau UTRA, trier les cellules voisines parmi les cellules voisines inter-fréquences filtrées sur la base des priorités des cellules voisines, et sélectionner le troisième nombre spécifié de cellules voisines d'une priorité la plus élevée en tant que cellules voisines inter-fréquences filtrées.
